(19) Europäisches Patentamt
European Patent Office
Office européen des brevets

(11) **EP 2 498 261 A2**

(12) **EUROPÄISCHE PATENTANMELDUNG**

(43) Veröffentlichungstag:
**12.09.2012 Patentblatt 2012/37**

(51) Int Cl.:
*G21C 9/06* (2006.01)    *B01D 53/86* (2006.01)

(21) Anmeldenummer: **11005066.3**

(22) Anmeldetag: **22.06.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **10.03.2011 RU 2011108693**

(71) Anmelder:
• **Shepelin, Vladimir**
  **Moscow 105215 (RU)**

• **Koshmanov, Dmitrij**
  **Moscow 115598 (RU)**

(72) Erfinder:
• **Shepelin, Vladimir**
  **Moscow 105215 (RU)**
• **Koshmanov, Dmitrij**
  **Moscow 115598 (RU)**

(74) Vertreter: **Jeck, Anton**
  **Klingengasse 2/1**
  **71665 Vaihingen/Enz (DE)**

(54) **Passive autokatalytische Rekombinationsanlage zur Rekombination von Wasserstoff und Sauerstoff mit einer in der Gasströmungsrichtung stufenweise zunehmenden Geschwindigkeit einer Katalysenreaktion**

(57)    Die Erfindung kann auf dem Gebiet der Wasserstoffsicherheit eingesetzt werden. Sie kann zur Vorbeugung von Ansammlungen eines brand- und explosionsgefährdeten Wasserstoffs in Räumen angewendet werden. Das betrifft vor allem Räumlichkeiten, in denen Wasserstoffleckagen aus verschiedenen Anlagen (z. B. aus Kühlsystemen der Erzeuger der Kraftwerke) möglich sind: Wasserstofflager, Atommülllager (wo Wasserstoff ununterbrochen infolge Radiolyse von Wasser und organischen Stoffen ausgeschieden wird), Hochtemperaturkorrosionsvorgänge, Unfälle in Atomkraftwerken usw. Das erreichbare technische Ergebnis der Erfindung ist eine Leistungssteigerung der Wasserstoffrekombination bei einer gleichen Gesamtfläche des katalytischen Überzugs und eine Zunahme der kritischen Wasserstoffkonzentration durch die Intensivierung der Wärmeabführung vom Katalysator. Gemäß der Erfindung weist das Gehäuse der passiven autokatalytischen Rekombinationsanlage in den mit Anordnungen der katalytischen Elemente bestückten Bereichen einen stufenweise von der Anordnung zu Anordnung in Richtung der Gasströmung abnehmenden Querschnitt auf. Dabei ist zusätzlich vorgesehen, dass die katalytischen Elemente jeder nachfolgenden Anordnung eine größere Höhe $H_2$ haben als die Höhe $H_1$ der katalytischen Elemente der vorhergehenden Anordnung. Im Einzelfall können es zwei Anordnungen der katalytischen Elemente sein, wobei die untere und die obere Anordnung als Platten ausgebildet sind und wobei jedes katalytische Element in Form von 5 bis 40 mm hohen Platten in der unteren Anordnung und von 90 bis 200 mm hohen Platten in der oberen Anordnung ausgebildet sind.

Fig. 1

EP 2 498 261 A2

**Beschreibung**

Die Erfindung betrifft eine passive autokatalytische Rekombinationsanlage zur Rekombination von Wasserstoff und Sauerstoff nach dem Oberbegriff des Anspruchs 1.

Die Erfindung bezieht sich auf das Gebiet der Wasserstoffsicherheit. Sie kann zur Vorbeugung von Ansammlungen eines brand- und explosionsgefährdeten Wasserstoffs in Räumen angewendet werden. Das betrifft vor allem Räumlichkeiten, in denen Wasserstoffleckagen aus verschiedenen Anlagen (z. B. aus Kühlsystemen der Erzeuger der Kraftwerke) möglich sind: Wasserstofflager, Atommülllager (in denen Wasserstoff ununterbrochen infolge Radiolyse von Wasser und organischen Stoffen ausgeschieden wird), Hochtemperaturkorrosionsvorgänge, Unfälle in Atomkraftwerken usw.

Dem Betrieb einer passiven autokatalytischen Rekombinationsanlage für Wasserstoff und Sauerstoff (PAR) liegt eine exotherme Reaktion zwischen Wasserstoff und Sauerstoff der Luft zugrunde:

$$H_2 + \tfrac{1}{2}\,O_2 \rightarrow H_2O\ (\text{Dampf}) + 244{,}05\ \text{kJ} \qquad (1)$$

Die PAR wird normalerweise in Form eines hohlen Standgehäuses (senkrecht angeordneten Hohlgehäuses) ausgebildet. Ihre obere und untere Stirnfläche stehen im freien Kontakt mit der Umgebung und den im unteren Teil der Anlage angeordneten Katalyseelementen (s. z. B. RU 52244, G21C9/06, 2005). Als katalytisches Material werden normalerweise Platin, Palladium und andere Metalle der Platingruppe verwendet. Der disperse metallene Katalysator wird auf einen porösen Träger - die Unterlage - aufgetragen. Beim Kontakt zwischen Wasserstoff und Sauerstoff und dem Katalysator fängt eine autokatalytische Reaktion an (1). Die durch diese Reaktion abgegebene Wärme erzeugt im Gehäuse eine Konvektionssteigströmung. Diese Steigströmung unterstützt diesen Vorgang ununterbrochen auf eine natürliche Weise (passive), ohne dass jegliche aktive Anregung für die Bewegung der Gasströmung durch die Rekombinationsanlage erforderlich ist.

Zugleich können die modernen PAR die aktuellen Belange der Praxis nicht vollständig befriedigen. Ihre Vervollkommnung verläuft vielseitig: Leistungssteigerung, Beschleunigung des Anfangsvorgangs, Verbilligung der katalytischen Einheit, die Edelmetalle der Platingruppe enthält, und Verminderung der Wärmebelastung, um einer Katalysatorüberhitzung vorzubeugen. Es sei bemerkt, dass die Katalysatorüberhitzung sehr gefährlich ist. Es geht darum, dass die Temperatur des katalytischen Elements und insbesondere seines unteren Teils sehr hoch sein kann. Dabei nimmt dieser untere Teil des katalytischen Elements Gas mit höchster Wasserstoffkonzentration auf. Je höher die Wasserstoffkonzentration in der Umgebung und die Gasströmung am Katalysator ist, desto höher ist auch die Prozessgeschwindigkeit und desto höher ist die lokale Katalysatortemperatur in der Rekombinationsanlage. Der Übergang von der katalytischen Rekombination zur Deflagrations-Wasserstoffentzündung ist bereits bei Wasserstoffkonzentrationen von über 4 - 5 % Vol. in der Luft möglich. Wenn der Wasserstoffgehalt 11 - 13 % überschreitet, kann ein Diffusionsbrennvorgang durch einen mehr zerstörenden Vorgang - Sprengung - abgelöst werden. Die Selbsterwärmung bis zu einer Temperatur über 500° C zieht eine Wasserstoffzündung in der Wasserstoff-Luft-Gasmischung nach sich.

Die Wasserstoffkonzentration, bei der ein solcher Temperaturbereich erreicht wird, wird als kritische Wasserstoffkonzentration ($C_{krit.}$) bezeichnet. Ihre Größe hängt auch von den baulichen Ausführungsmerkmalen der PAR, von der Struktur des eigentlichen Katalysators und seiner Anordnung (Zusammenbaus) in der Kassette ab. Bei verschiedenen Arten der modernen PAR sind die unteren Grenzwerte in Bezug auf die Wasserstoffentzündung durch seine Konzentration von 4...10 % Vol. begrenzt.

Aus dem Stand der Technik ist eine passive autokatalytische Rekombinationsanlage (PAR) bekannt, in der die Zunahme der Arbeitsgrenzkonzentration von Wasserstoff durch die Ausführung der katalytischen Elemente erreicht wird. Die katalytische Oberfläche im unteren Teil des katalytischen Elements wird teilweise mit einer inaktiven porösen Beschichtung abgedeckt. Es entsteht dabei eine "Drosselschicht". Diese vermindert die Diffusionsströmung der Gasreagenzien und somit auch die Wärmeabgabe (s. RU 2222060, G21 C9/06, 2000 - Analogielösung). Dieser Aufbau des katalytischen Elements ermöglicht es, den Bereich der Arbeitskonzentrationen von Wasserstoff bis zu 10 % Vol. zu erweitern. Jedoch vermindert die Abdeckung von einer Partie der katalytischen Oberfläche mit inaktiver poröser Schicht unvermeidlich die Leistungsfähigkeit von PAR bei relativ geringem Erhöhungsgrad von $C_{krit.}$.

In einer aus der Patentschrift RU 77 488, G21 C9/06, 2008 (Analogielösung) bekannten PAR wird eine Katalysatorüberhitzung mittels einer vollständigen Abschirmung des katalytischen Elements mit einem dicht geflochtenen Metallnetz beseitigt. Das genannte Metallnetz bewirkt einen Widerstand, wobei es sich hauptsächlich um eine Sauerstoffdiffusion handelt. Der Wasserstoff ist dagegen mehr beweglich und empfindet den beachtlich geringeren Metallnetzwiderstand. Als Ergebnis wird an der Katalysatoroberfläche eine mit Wasserstoff angereicherte Gasmischung gebildet. Das verschafft seinerseits viel günstigere kinetische Bedingungen für den Prozess der Wasserstoffrekombination. Darüber hinaus trägt das wärmeleitfähige Metallnetz zum Ausgleich des Temperaturverlaufprofils über die gesamte Höhe des katalytischen Elements bei. Somit wird der Reaktionsbereich erweitert und die lokale Temperatur darin abgesenkt. Als Ergebnis gelingt es, den Arbeitsbereich von Wasserstoffkonzentrationen bis zur $C_{krit.}$ um mindestens 20 % Vol. zu erweitern. Zugleich führt die Abdeckung der katalytischen Oberfläche mit dem Abschirmungsnetz unvermeidlich dazu, dass die Katalysatoraktivität und folglich die Leistungsfähigkeit von PAR vermindert werden.

Die bekannte passive Anlage zur Rekombination (PAR) von Wasserstoff und Sauerstoff enthält ein Gehäuse in Form eines aufrecht angeordneten Rohrs. Das Rohr hat einen runden Querschnitt oder einen Querschnitt mit einem anderen Profil. Die obere und die untere Stirnfläche des Rohrs können frei mit der Umgebung kommunizieren. Die bekannte PAR enthält auch wenigstens zwei Anordnungen von katalytischen Elementen. Diese Anordnungen befinden sich im unteren Teil des Gehäuses und sind über die Höhe des Gehäuses verteilt untergebracht. Die katalytischen Elemente sorgen für eine stufenweise Zunahme der Geschwindigkeit der katalytischen Reaktion von Anordnung zu Anordnung in der Richtung der Gassteigungsströmung in der Rekombinationsanlage (s. US 6846775, G21C9/00, 2005 - der nächstkommende Stand der Technik). Laut dieser Patentschrift wird die Steigerung der katalytischen Aktivität in den folgerichtig über die Höhe des Gehäuses untergebrachten Anordnungen der katalytischen Elemente durch die unterschiedlichen Dichten beim Auftragen einer katalytischen Beschichtung auf dem porösen Träger sowie durch eine eventuelle teilweise Abschirmung der aktiven Schicht durch den nichtaktiven porösen Überzug erreicht. Der Mangel dieser technischen Lösung ist eine Verringerung der Leistungsfähigkeit von PAR dank einer Verminderung der gesamten wirkenden Katalysatormenge.

Die Patentbeschreibung enthält keine Angaben im Zusammenhang mit einem Erhöhungsgrad des $C_{krit.}$-Wertes. Es kann angenommen werden, dass diese Größe in diesem Fall nicht hoch genug sein kann, da keine Mittel zur Intensivierung der Wärmeabführung vom Katalysator vorgesehen sind.

Es ist Aufgabe der Erfindung, die Leistung der Wasserstoffrekombination bei einer gleichen Gesamtfläche des katalytischen Überzugs und einer Zunahme der kritischen Wasserstoffkonzentration durch die Intensivierung der Wärmeabführung vom Katalysator zu steigern.

Die gestellte Aufgabe wird durch die Merkmale des Anspruchs 1 gelöst.

Das wird folgenderweise sichergestellt. Die PAR für Wasserstoff und Sauerstoff enthält ein Gehäuse in Form eines senkrecht angeordneten Rohrs und wenigstens zwei Anordnungen von katalytischen Elementen. Der Querschnitt des Rohrs ist kreisförmig oder weist ein anderes Profil auf. Das Rohr steht mittels seiner oberen und unteren Stirnfläche im freien Kontakt mit der Umgebung. Die zwei Anordnungen der katalytischen Elemente sind im unteren Teil des Gehäuses über seine Höhe untergebracht. Die katalytischen Elemente stellen eine stufenweise Zunahme der Geschwindigkeit der katalytischen Reaktion von Anordnung zu Anordnung in der Richtung der Gassteigungsströmung in der Rekombinationsanlage sicher. Gemäß der Erfindung weist das Gehäuse in den mit Anordnungen der katalytischen Elemente bestückten Bereichen einen stufenweise von Anordnung zu Anordnung in Richtung der Gasströmung abnehmenden Querschnitt auf.

Dabei ist es sinnvoll dass die Höhe der katalytischen Elemente jeder nachfolgenden Anordnung größer als die der katalytischen Elemente der vorhergehenden Anordnung ist.

In der Einzelausgestaltung der PAR gemäß der Erfindung sind zwei Anordnungen katalytischer Elemente vorgesehen. Dabei ist jedes katalytische Element in Form von 5...40 mm hohen Platten in der unteren Anordnung und von 90...200 mm hohen Platten in der oberen Anordnung ausgebildet.

Ein Ausführungsbeispiel der Erfindung ist in den Zeichnungen schematisch dargestellt. Es zeigen:

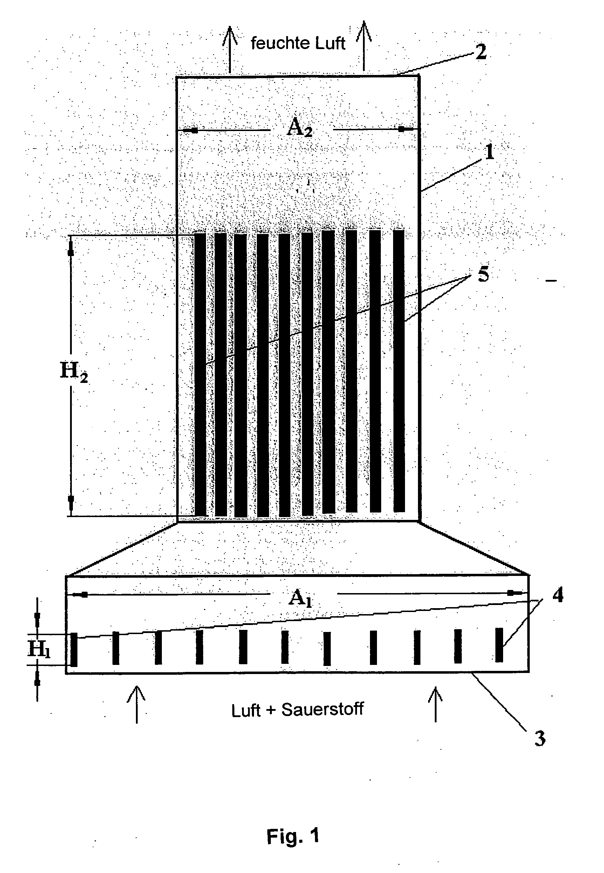

Fig. 1 die schematische Darstellung der PAR gemäß der Erfindung im Längsschnitt und

Fig. 2 das Kurvenbild der Aktivität verschiedener Anordnungen, die in der PAR gemäß der Erfindung und nach einer der bekannten Patentschriften eingesetzt werden (Angaben über den nächsten Stand der Technik liegen nicht vor).

1. Die PAR für Wasserstoff und Sauerstoff gemäß der Erfindung weist ein Gehäuse 1 in Form eines Standrohrs auf, dessen Querschnitt rund ist oder ein anderes Profil aufweist. Dabei steht das Rohr an seiner oberen und unteren Stirnfläche 2 und 3 jeweils im freien Kontakt mit der Umgebung. Im unteren Teil des Gehäuses 1 sind gemäß einer Einzelausgestaltung der Erfindung zwei Anordnungen 4 und 5 von katalytischen Elementen über die Höhe des Gehäuses verteilt untergebracht. Das Gehäuse (Rohr) 1 weist einen stufenweise von Anordnung zu Anordnung in Richtung der Gasströmung abnehmenden Querschnitt im Bereich der Anordnungen 4 und 5 der katalytischen Elemente auf.

2. Bei der passiven autokatalytischen Rekombinationsanlage ist die Höhe der katalytischen Elemente jeder nachfolgenden Anordnung größer als die Höhe der katalytischen Elemente der vorhergehenden Anordnung.

3. Bei der passiven autokatalytischen Rekombinationsanlage sind zwei Anordnungen katalytischer Elemente vorgesehen, wobei jedes katalytische Element in Form von 5...40 mm hohen Platten in der unteren Anordnung und von 90...200 mm hohen Platten in der oberen Anordnung ausgebildet ist.

Für ein Rohr mit einem rechteckigen Querschnitt bedeutet es, dass die Breite $A_2$ des Rohrs 1 im Bereich der platzierten Anordnung 5 der katalytischen Elemente kleiner ist als die Rohrbreite $A_1$ im Bereich der platzierten Anordnung 4 der katalytischen Elemente, d. h. $A_2 < A_1$.

Das Beispiel beschreibt eine Einzelausgestaltung, wo jedes katalytische Element in beiden Anordnungen die Form von Platten mit einer Höhe $H_1$ = 5...40 mm in der unteren Anordnung 4 und mit einer Höhe $H_2$ = 90...200 mm in der oberen Anordnung 5 hat, d. h. $H_2 > H_1$.

Die PAR gemäß der Erfindung funktioniert folgenderweise.

Sobald Wasserstoff in die Luft des kontrollierbaren Raums eintritt, kommt sein Kontakt mit dem im Gehäuse 1 der PAR angeordneten Katalysator zustande. Als Ergebnis wird spontan die autokatalytische Rekombinationsreaktion von Wasserstoff und Sauerstoff aus der Luft ausgelöst. Dabei wird Wasserdampf erzeugt und Wärme abgegeben. Diese Wärme regt die senkrechte Bewegung der Gasmischung entlang des Gehäuses 1 der PAR an. Dabei werden immer neue Portionen der wasserstoffhaltigen Luft ununterbrochen in den unteren Teil des Gehäuses mitgezogen. Die Geschwindigkeitsdifferenz bei der katalytischen Reaktion in den Anordnungen 4 und 5 der katalytischen Elemente (Platten) wird sowohl durch die Verengung des Querschnitts im Gehäuse 1 der PAR ($A_2 < A_1$) als auch durch die Abmessungen ($H_2 > H_1$) der genannten Platten erreicht.

Während des Betriebs der PAR gemäß der Erfindung wird eine lineare Geschwindigkeit $V_2$ der Gasströmung in der Rekombinationsanlage im Bereich der oberen Anordnung 5 mit einer Querschnittsfläche $S_2$ des Gehäuses 1 ermittelt. Die Strömungsgeschwindigkeit $V_1$ im Bereich der unteren Anordnung 4 mit einer größeren Querschnittsfläche $S_1$ des Gehäuses 1 ist dagegen um das $S_2/S_1$-fache geringer. Dabei ist ein hoher Wärmeabfuhrgrad vom Katalysator in allen genannten Bereichen erreicht. Das ist dank der Einstellbarkeit der optimalen Gasströmungsgeschwindigkeiten in Bereichen verschiedener Anordnungen der katalytischen Elemente möglich. Dies stellt eine entsprechende Zunahme der kritischen Wasserstoffkonzentration $C_{krit.}$ sicher. Die gleich hohe Dichte des katalytischen Überzugs bei allen katalytischen Elementen ermöglicht es gleichzeitig, die Leistungsfähigkeit der PAR gemäß der Erfindung bei derselben Gesamtfläche des genannten Überzugs gegenüber dem Stand der Technik zu steigern. Oder es wird möglich, die PAR mit kleineren Abmessungen zu gestalten, wobei ihre Leistungsfähigkeit unverändert bleibt.

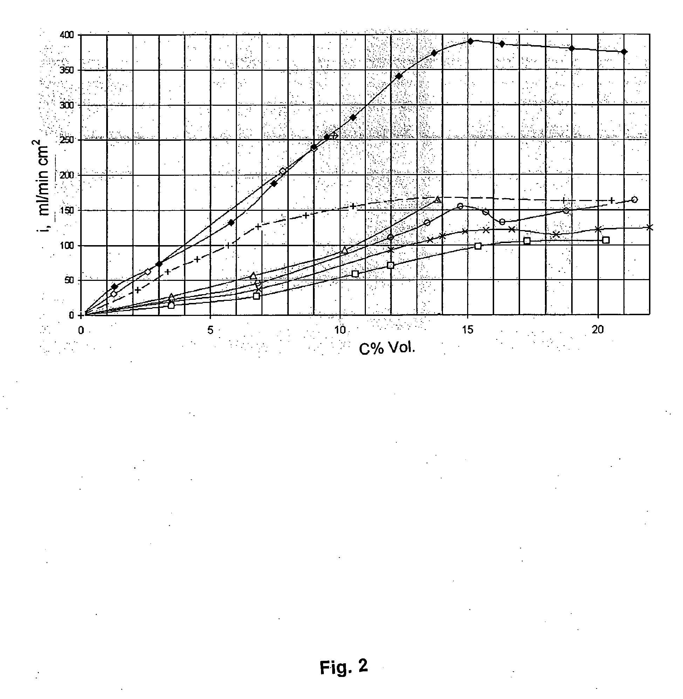

Die Kennlinien aus Fig. 2 zeigen die Aktivitäten unterschiedlicher katalytischer Anordnungen, die in PAR gemäß der Erfindung und in der bekannten Anlage nach dem Stand der Technik mit katalytischen Elementen (mit Abschirmung mittels des dicht geflochtenen Metallnetzes) angewendet sind.

Die vier unteren Kennlinien zeigen das Verhalten der katalytischen Anordnung aus 10 mm hohen Platten bei einer Änderung der Wasserstoffkonzentration in den Luftströmungen mit unterschiedlicher Geschwindigkeit. Diese Geschwindigkeit ist künstlich in der Durchlauf-Rekombinationsanlage erzeugt und beträgt 0,13 m/Sek. ($\square$), 0,19 m/Sek. ($\times$), 0,26 m/Sek.(o) und 0,34 m/Sek.($\Delta$). Das Ablesen der letzten Kennlinie wurde bei einer Wasserstoffkonzentration von 13,8 % Vol. in der Strömung unterbrochen, da der Katalysator überhitzt wurde und eine Entflammung folgte (diese Stelle ist in der Kennlinie durchgekreuzt).

Die Versuche mit niedrigeren Strömungsgeschwindigkeiten (drei obige Kennlinien) ergaben keine Überhitzung des Katalysators und erreichten die Grenzaktivitätsbereiche (über 15 % Vol.). Das zeugt von der Bilanz zwischen der Wärme, die infolge der Reaktion (1) entsteht, und der Abfuhr dieser Wärme vom Katalysator mit der Gasströmung. Als Ergebnis geht die Temperatur des laufenden Katalysators bei Geschwindigkeiten von unter 0,26 m/Sek. nicht über die untere Grenze der Wasserstoffentzünd ung.

Fig. 2 zeigt auch den ähnlichen Zusammenhang (0) für die Anordnung von 120 mm hohen katalytischen Platten. Dieser Zusammenhang wurde in der gleichen Rekombinationsanlage mit einer Querschnittsfläche, allerdings beim Selbstzug, ermittelt. Der Selbstzug wird durch die Arbeit des Katalysators ausgelöst. Die Kennlinie ist durch eine Wasserstoffkonzentration von 9,7% Vol. infolge der Entflammung des überhitzten Katalysators begrenzt (diese Stelle ist in der Kennlinie durchgekreuzt). Die Gasströmungsgeschwindigkeit betrug in diesem Fall ca. 0,5 m/Sek. Um die Strömungsgeschwindigkeit in einer solchen Situation bis zu einer gefahrlosen Geschwindigkeit zu reduzieren, sollte ein reaktionsschwacher Katalysator innerhalb der Querschnittsfläche $S_1 \geq (0,5/1,26)$ eingesetzt werden, d. h. diese Fläche sollte um das 1,92-fache größer sein.

Die mit Punkten ($\blacklozenge$) in Fig. 2 gekennzeichnete Kennlinie schildert den Betrieb der PAR gemäß der Erfindung mit dem Flächenverhältnis im oberen und im unteren Querschnitt von 1 : 2,5 mit denselben katalytischen Platten (120 mm und 10 mm hoch), die in der Durchlauf-Rekombinationsanlage getestet wurden. Aus dem Kurvenbild ist ersichtlich, dass die Veränderung des PAR-Profils und die Aufteilung des Katalysators in wenigstens zwei Zonen es ermöglicht, den Bereich der Arbeitskonzentrationen von Wasserstoff wesentlich zu erweitern, wobei $C_{krit.}$ bis mindestens 21 % Vol. erhöht wird.

In diesem Fall weist die aus der unteren Anordnung der Platten in den Bereich der oberen Anordnung einströmende Gasströmung niedrigere Konzentrationen der Reagenzien (Sauerstoff und Wasserstoff) sowie einen äquivalenten Wasserdampfgehalt auf (Wasserdampf entsteht als Produkt der Reaktion (1)). Das Vorhandensein von Wasserdampf in der Wasserstoff-Luft-Mischung bremst die Wasserstoffentzündung. Darüber hinaus ist der begrenzte Gasraum zwischen den beiden Anordnungen beachtlich kleiner als es für eine Wasserstoffentzündung von einem erhitzten Körper erforderlich ist. Das verhindert die Ausbreitung eines Kettenvorgangs der Wasserstoffentzündung. Dadurch ist eine beachtliche Erweiterung des Arbeitsbereichs der Wasserstoffkonzentration erreicht, wobei eine möglichst höchste Aktivität dieser katalytischen Struktur und einer damit betriebenen Rekombinationsanlage erhalten bleibt.

Fig. 2 enthält zum Vergleich auch eine Kennlinie (gestrichelt) für eine Anordnung mit katalytischen Platten, die durch die Metallnetze abgeschirmt sind. Aus den Kennlinien geht hervor, dass es die PAR gemäß der Erfindung ermöglicht, die Leistung der Rekombinationsanlage beachtlich - um 20 bis 120 % - zu steigern, je nach dem Wasserstoffkonzentrationsbereich im Wasserstoff-Luftmedium.

**Patentansprüche**

1. Passive autokatalytische Rekombinationsanlage zur Rekombination von Wasserstoff und Sauerstoff mit einem Gehäuse (1) in Form eines Standrohrs, dessen Querschnitt rund ist oder ein anderes Profil aufweist, wobei das Rohr an seiner oberen und unteren Stirnfläche (2 und 3) im freien Kontakt mit der Umgebung steht und wobei im unteren Teil des Gehäuses (1) wenigstens zwei Anordnungen (4, 5) katalytischer Elemente entlang der Höhenachse des Gehäuses (1) eingebaut sind, die eine stufenweise Zunahme der Geschwindigkeit der katalytischen Reaktion von Anordnung (4) zu Anordnung (5) in Richtung der Gassteigungsströmung in der Rekombinationsanlage sicherstellen, **dadurch gekennzeichnet,**
   **dass** das Gehäuse (1) in den mit Anordnungen (4, 5) der katalytischen Elemente bestückten Bereichen einen stufenweise von der Anordnung (4) zu Anordnung (5) in die Richtung der Gasströmung abnehmenden Querschnitt aufweist.

2. Passive autokatalytische Rekombinationsanlage nach Anspruch 1,
   **dadurch gekennzeichnet,**
   **dass** die Höhe ($H_2$) der katalytischen Elemente in jeder nachfolgenden Anordnung (5) größer als die Höhe ($H_1$) der katalytischen Elemente der vorhergehenden Anordnung (4) ist.

3. Passive autokatalytische Rekombinationsanlage nach Anspruch 2,
   **dadurch gekennzeichnet,**
   **dass** darin zwei Anordnungen (4, 5) katalytischer Elemente vorgesehen sind, wobei jedes katalytische Element in Form von 5...40 mm hohen Platten in der unteren Anordnung (4) und von 90...200 mm hohen Platten in der oberen Anordnung (5) ausgebildet sind.

feuchte Luft

**2**

**1**

$A_2$

**5**

$H_2$

$A_1$

**4**

$H_1$

**3**

Luft + Sauerstoff

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6846775 B